# EUROPEAN PATENT APPLICATION

(11) **EP 3 090 632 A1**
(43) Date of publication of application: **09.11.2016**
(21) Application number: 16170996.9
(22) Date of filing: 22.02.2012
(51) Int. Cl.: A01N 39/04, A01N 25/00

(54) **NEW USES OF CHOLINE CHLORIDE IN AGROCHEMICAL FORMULATIONS**

(30) Priority: 22.02.2011 US 201161445144 P; 30.03.2011 EP 11305356
(62) Divisional of application: 12705663.8
(71) Applicant: Rhodia Operations, 75009 Paris (FR)
(72) Inventor: SCLAPARI, Thierry, Saint-Jean de Thurigneux, NJ New Jersey 08558 (US); BRAMATI, Valerio, 20020 Arese Milano (IT); ERBA, Ambrogio, 20873 Brianza (IT)
(74) Representative: Cardon, Flavie

(57) **Abstract**

The present invention relates to the use of choline chloride in a formulation comprising at least one agrochemical active ingredient selected from 2,4-D or MCPA, as a bio-activator to increase the penetration of said agrochemical active ingredient in a plant.

## Description

The present invention relates to new uses of choline chloride in agrochemical formulations.

Plant cuticles are a protective waxy covering produced only by the epidermal cells of leaves, young shoots and all other aerial plant organs without periderm. The cuticle is composed of an insoluble cuticular membrane impregnated by and covered with soluble waxes. The cuticular membrane is impregnated with cuticular waxes and covered with epicuticular waxes, which are mixtures of hydrophobic aliphatic compounds, hydrocarbons with chain lengths typically in the range C16 to C36. In addition to its function as a permeability barrier for water and other molecules, the micro and nano-structure of the cuticle confer specific surface properties that prevent contamination of plant tissues with external water, dirt and microorganisms. The waxy sheet of cuticle also functions in defense, forming a physical barrier that resists penetration by virus particles, bacterial cells, and the spores or growing filaments of fungi.

It is generally known that many agrochemical active compounds, in particular those having systemic action, have to penetrate into the plant to be able to unfold their activity evenly throughout the plant. Thus, when the active compound is taken up via the leaves, the active compounds have to overcome the penetration barrier of the cuticle. Moreover, it is important that the agrochemical active compounds penetrate rapidly, distributed over a surface which is as large as possible, into the plant, since there may otherwise be the risk that the active components are washed off by rain.

Furthermore, it is generally known that some additives used in crop protection compositions, such as, for example, surfactants, mineral oils and vegetable oils, promote penetration of agrochemical active compounds into the plant and are thus able to enhance the activity of the active compounds. In specific cases, the additives may increase wettability, lead to a better distribution of the spray coating on the surface (=spreading) of the plant, increase the availability of the active compound in the spray dried residue by partial dissolution or directly promote penetration of the active compound through the cuticle.

Usually, glyphosate formulations are formulated with ethoxylated fatty amines surfactants. However, these surfactants are believed to be rather ecotoxic, irritant or slightly biodegradable. There is a need for replacing these compounds or for reducing the amount thereof in the compositions.

WO 01/17358 describes compositions comprising a high amount of glyphosate isopropylamine salt and a mixture of surfactants comprising a surfactant of formula R-CO-NR'-(CR'₂)ₙ-COOM. The mixture of surfactants is taught enhancing herbicidal effectiveness. The surfactant is however expensive and there is a need for other solutions.

WO 03/063589 describes compositions comprising 360 g/L of glyphosate isopropylamine salt (as glyphosate acid equivalent, 783 g/L as salt concentration), a betaine surfactant, and at least one further compound such as optionally ethoxylated amines or etheramines. There is a need for other solutions, especially for composition that are considered as less ecotoxic, and/or less sensitizing, and/or for composition that have improved bioefficacy.

Choline chloride is an organic compound and a quaternary ammonium salt. It has a choline cation with chloride anion. Alternative names are hepacholine, biocolina and lipotril. Choline is a dietary component and found in food as free choline and as esterified forms such as phosphocholine, glycerophosphocholine, sphingomyeline, and phosphatidylcholine. Choline chloride has had wide dispersive use as a food additive for animal husbandry since the early 1930s.

A very small amount of the choline chloride production is used for formulations in the field of plant growth regulators. In particular, Meteor^{®} is a plant growth regulator for use on winter wheat and spring wheat. Meteor^{®} contains two active ingredients, imazaquin and chlormequat chloride. These active ingredients from different chemical groups have two modes of action, both of which can regulate the growth of wheat and provide protection against lodging. In Meteor^{®}, choline chloride is not used as an active compound but to reduce the toxicity of the plant growth regulators. It is thus used always in mixture with chlormequat chloride.

There is a need for new compositions with a better ecotoxic profile (especially lowering amounts of fatty ethoxylates such as fatty amine ethoxylates), and/or better perception of the ecotoxic profile, while keeping an acceptable efficacy or equivalent efficacy or even improving efficacy.

There is a need to replace surfactants which show many drawbacks such as toxicity, lack of compatibility and generation of high amounts of foam.

The aim of the present invention is to provide a compound having the same properties as the usual surfactants but having a better ecotoxic profile.

The aim of the present invention is to provide a formulation to be applied onto plants comprising a non-toxic penetration enhancer having an acceptable efficiency.

The aim of the present invention is to provide a formulation to be applied onto plants comprising a compound without any surfactant properties which thus does not generate foam and avoid any compatibility issues.

The present invention relates to the use of choline chloride in a formulation comprising at least one agrochemical active ingredient, as a bio-activator to increase the penetration of said agrochemical active ingredient in a plant.

The present invention is based on the newly found activity of choline chloride as bio-activator. Choline chloride may be used in agrochemical formulations as bio-activator.

In the context of the present invention, the term "bio-activator" (or "adjuvant" or "carrier") refers to a compound which improves the effect or activity of the agrochemical active ingredient while having no phytotoxicity or activity when used alone. Such a compound may also be named "penetration enhancer".

The term penetration enhancer is understood as meaning compounds which accelerate the uptake of agrochemicals through the cuticle of a plant into the plant, i.e. the rate of uptake, and/or increase the amount of active substance absorbed into the plant, thus making it possible for the agrochemicals to become effective.

The formulation of the present invention may comprise one agrochemical active ingredient or a mixture of agrochemical active ingredients.

The term "agrochemical active ingredient' or "agrochemicals" is used in the sense of a biocide.

A biocide is a chemical substance capable of killing different forms of living organisms used in fields such as medicine, forestry, and mosquito control.

Usually biocides are divided into two sub-groups:
- pesticides, which includes herbicides, insecticides, fungicides, plant growth regulators, rodenticides, algicides, moluscicides and miticides,
- antimicrobials, which includes germicides, antibiotics, antibacterials, antivirals, antifungals, antiprotozoals and antiparasites.

Preferably, the agrochemical active ingredient of the formulation used in the present invention is a pesticide.

Preferably, the agrochemical active ingredient of the formulation used in the present invention is a pesticide selected from herbicides, insecticides and fungicides.

Preferably, the agrochemical active ingredient of the formulation used in the present invention is a water-soluble active ingredient.

The active ingredients may be chosen from the group of the salt-like (salt-containing) water-soluble active ingredients such as glufosinate (salts), glyphosate (salts), paraquat, diquat and the like.

Suitable active ingredients are generally those which, during preparation of aqueous spray liquors, are fully or partially dissolved in the aqueous phase, generally dissolved by 1 to 100 percent by weight, preferably by 5 to 100 percent by weight, more preferably by 10 to 100 percent by weight, in particular by 20 to 100 percent by weight, very particularly preferably by 30 to 100 percent by weight, based on the weight of the active ingredient in the spray liquor, preferably at the active ingredient concentrations customary in practice.

Preference is given here to active ingredients having a solubility in water of more than 10 mg of active ingredient per liter of water, preferably more than 20 mg/l, in particular more than 30 mg/l, at room temperature.

Suitable active ingredients also include partially water-soluble fertilizers, preferably foliar fertilizers (fertilizers which are taken up by the leaves of the plants), such as urea or foliar macro- or microelement fertilizer, including chelates.

Also suitable is the combination of active crop protectant ingredients, such as herbicides, insecticides and fungicides, and, if desired, fertilizers.

Examples of water-soluble agrochemicals useful in the composition of the present invention include glyphosate, glufosinate, paraquat, diquat, dicamba, fomesafen, imazethapyr, imazaquin, imazapyr, propamocarb, 2,4-D, clopyralyd and bentazone.

Mixtures of agrochemicals may also be used, including for example mixtures of glyphosate and dicamba and mixtures of glyphosate and diquat. Numerous other examples of suitable agrochemicals and mixtures of agrochemicals are listed in standard works of reference and will occur to those skilled in the art. Where appropriate, the acidic agrochemicals are suitably used in the form of their water-soluble salts.

According to a preferred embodiment, the agrochemical active ingredient of the formulation used in the present invention is an aminophosphate or aminophosphonate salt.

Aminophosphate or aminophosphonate salts are known by the one skilled in the art. Preferred salts are glyphosate or glufosinate salts.

Glyphosate refers to N-(phosphonomethyl)glycine.

Glufosinate refers to 4-[hydroxy(methyl)phosphinoyl]-DL-homoalanine. The salts include:
- sodium (Na) salts;
- potassium (K) salts;
- ammonium salts having N(R)₄⁺ cations wherein R groups, identical or different, represent a hydrogen atom or a linear or non linear, saturated or unsaturated C1-C6 hydrocarbon group, optionally substituted by a hydroxyl group, for example isopropylamine salts;
- sulphonium salts; said salts being present alone or in a combination.

Ammonium salts that may in particular be cited include salts obtained from secondary or primary amines such as isopropylamine (IPA), dimethylamine, diamines such as ethylenediamine, or alkanolamines such as monoethanolamine (MEA).

Trimethylsulphonium is a perfectly suitable sulphonium salt. Another suitable ammonium salt is the NH₃ salt (ammonium salt).

Preferred glyphosate salts for herbicidal applications are glyphosate potassium (K) salt, glyphosate sodium (Na) salt, isopropylamine (IPA) salt, monoethanolamine (MEA) salt, trimethylsulphonium salt, potassium salt, ammonium (NH₃) salt, and mixtures or associations thereof, for example as taught in WO01/26469 (Nufarm) and WO03/013241 (Nufarm).

In the present invention, glyphosate potassium salts, glyphosate isopropylamine salts and glufosinate ammonium salts are preferred.

In a preferred embodiment, the ratio between the cation such as the cation of isopropylamine, and glyphosate is of about 1/1. However the ratio may be higher than 1/1. Such a ratio provides compositions having higher pH. The higher the pH, the lower the crystallization. pH can be also managed by using any other basic compound, for example KOH or other buffers.

The invention can allow high loads of glyphosate salts with good compatibility.

At high loads of glyphosate salts, the invention allows among other handling less composition (higher load), with a good stability (no crystals) with an interesting bioefficacy and/or ecotoxic profile.

According to another embodiment, the agrochemical active ingredient may be a phenoxy acid herbicide.

Preferably, the phenoxy acid herbicide is a phenoxyacetic acid herbicide, phenoxybutyric acid herbicide, phenoxypropionic acid herbicide, aryloxyphenoxypropionic acid herbicide, or a mixture thereof.

The most preferred phenoxy acid herbicides are 4-chlorophenoxyacetic acid (4-CPA), (2,4-dichlorophenoxy)acetic acid (2,4-D), (3,4-dichlorophenoxy)acetic acid (3,4-DA), 4-chloro-o-tolyloxyacetic acid (MCPA), S-ethyl 4-chloro-o-tolyloxythioacetate (MCPA-thioethyl), 4-(4-chlorophenoxy)butyric acid (4-CPB), 4-(2,4-dichlorophenoxy)butyric acid (2,4-DB), 4-(3,4-dichlorophenoxy)butyric acid (3,4-DB), 4-(4-chloro-o-tolyloxy)butyric acid (MCPB), (RS)-2-(3-chlorophenoxy)propionic acid (cloprop), (RS)-2-(4-chlorophenoxy)propionic acid (4-CPP), (RS)-2-(2,4-dichlorophenoxy)propionic acid (dichlorprop), (R)-2-(2,4-dichlorophenoxy)propionic acid (dichlorprop-P), (RS)-2-(3,4-dichlorophenoxy)propionic acid (3,4-DP), (RS)-2-(2,4,5-trichlorophenoxy)propionic acid (fenoprop), (RS)-2-(4-chloro-o-tolyloxy) propionic acid (mecoprop), (R)-2-(4-chloro-o-tolyloxy)propionic acid (mecoprop-P), (RS)-2-[4-(3,5-dichloro-2-pyridyloxy)phenoxy]propionic acid (chlorazifop), (R)-2-[4-(5-chloro-3-fluoro-2-pyridyloxy)phenoxy]propionic acid (clodinafop), (RS)-2-[4-(4-chlorophenoxy)phenoxy]propionic acid (clofop), (R)-2-[4-(4-cyano-2-fluorophenoxy) phenoxy]propionic acid (cyhalofop), (RS)-2-[4-(2,4-dichlorophenoxy)phenoxy] propionic acid (diclofop), (RS)-2-[4-(6-chloro-1,3-benzoxazol-2-yloxy)phenoxy] propionic acid (fenoxaprop), (R)-2-[4-(6-chloro-1,3-benzoxazol-2-yloxy)phenoxy] propionic acid (fenoxaprop-P), (RS)-2-[4-(6-chloro-1,3-benzothiazol-2-yloxy) phenoxy]propionic acid (fenthiaprop), (RS)-2-{4-[5-(trifluoromethyl)-2-pyridyloxy] phenoxy}propionic acid (fluazifop), (R)-2-{4-[5-(trifluoromethyl)-2-pyridyloxy] phenoxy}propionic acid (fluazifop-P), (RS)-2-{4-[3-chloro-5-(trifluoro-methyl)-2-pyridyloxy]phenoxy}propionic acid (haloxyfop), (R)-2-{4-[3-chloro-5-(trifluoromethyl)-2-pyridyloxy]phenoxy}propionic acid (haloxyfop-P), (RS)-2-[2-[4-(3,5-dichloro-2-pyridyloxy)phenoxy]propionyl]-isoxazolidine (isoxapyrifop), (R)-2-[4-(6-chloro-1,3-benzoxazol-2-yloxy)-phenoxy]-2'-fluoro-N-methylpropionanilide (metamifop), 2-iso-propylidene-aminooxyethyl (R)-2-[4-(6-chloroquinoxalin-2-yloxy)phenoxy]propionate (propaquizafop), (RS)-2-[4-(6-chloroquinoxalin-2-yloxy)phenoxy]propionic acid (quizalofop), (R)-2-[4-(6-chloroquinoxalin-2-yloxy)phenoxy]propionic acid (quizalofop-P), (RS)-2-[4-([alpha],[alpha],[alpha]-trifluoro-p-tolyloxy)phenoxy] propionic acid (trifop), (2,4,5-trichlorophenoxy)acetic acid (2,4,5-T), 4-(2,4,5-trichlorophenoxy)butyric acid (2,4,5-TB), and salts and mixtures thereof.

In the present invention, 2,4-D (2,4-Dichlorophenoxyacetic acid, salt) and MCPA (2-methyl-4-chlorophenoxyacetic acid, amine or sodium salt) are preferred.

According to another embodiment, other herbicides based on paraquat, quaternary ammonium herbicides (1,1-dimethyl-4,4-bipyridinium) are part of the invention when combined with choline chloride adjuvant.

In the present invention, the formulation may be a tank-mix or a built-in formulation. Preferably, the formulation used in the present invention is a built-in formulation.

The formulations used in the present invention may be "tank-mix" systems. Such formulations are prepared by the user by mixing separately each of their constituents and diluting this mixture, usually with water, directly in a tank intended then for spreading the obtained formulation.

Preferably, the formulations used in the present invention are formulations where all necessary constituents are incorporated directly in ("built-in") to a formulation concentrate, such as an SC, EW, SE, SL, CS or ME.

It is known that aqueous-based compositions can be chosen from a number of formulation types, including soluble concentrates (SL), emulsions (both oil in water (EW) and water in oil (EO)), micro-emulsions (ME), suspension concentrates (SC) and capsule suspensions (CS). The formulation type chosen in any instance depends upon the particular purpose envisaged and the physical, chemical and biological properties of the components of the composition.

Soluble Concentrates (SL) may be prepared by dissolving a compound, for example an agrochemical, in water. These solutions may contain a surface active agent (for example to improve water dilution or prevent crystallisation in a spray tank).

Oil-in-water emulsions (EW) may be prepared by dissolving a compound, for example an agrochemical, in an organic solvent (optionally containing one or more wetting agents, one or more emulsifying agents or a mixture of said agents). Preparation of an agrochemical EW may involve obtaining an agrochemical either as a liquid (if it is not a liquid at room temperature, it may be melted at a reasonable temperature, typically below 70°C) or in solution (by dissolving it in an appropriate solvent) and then emulsifying the resultant liquid or solution into water containing one or more surface active agents [SFAs], under high shear, to produce an emulsion. Suitable solvents for use in EWs include vegetable oils, chlorinated hydrocarbons (such as chlorobenzenes), aromatic solvents (such as alkylbenzenes or alkylnaphthalenes) and other appropriate organic solvents that have a low solubility in water. Water-in-oil emulsions (EO) may be prepared in a similar way to EWs and if a very high oil loading is required or if the nature of the components dictate then they may be more suitable than an EW; the EO formulation is two-phase and is designed to phase-invert upon addition to a spray-tank of water.

SFAs are chemicals that are able to modify the properties of an interface (for example, liquid/solid, liquid/air or liquid/liquid interfaces) by lowering the interfacial tension and thereby leading to changes in other properties (for example dispersion, emulsification and wetting).

Microemulsions (ME) may be prepared by mixing water with a blend of one or more solvents with one or more SFAs, to produce spontaneously a thermodynamically stable liquid formulation. To prepare an agrochemical ME, an agrochemical is present initially in either the water or the solvent/SFA blend. Suitable solvents for use in MEs include those hereinbefore described for use in EWs. An ME may be either an oil-in-water or a water-in-oil system (which system is present may be determined by conductivity measurements) and may be suitable for mixing water-soluble and oil-soluble agrochemicals in the same formulation. An ME is suitable for dilution into water, either remaining as a microemulsion or forming a conventional oil-in-water emulsion.

Suspension concentrates (SC) may comprise aqueous or non-aqueous suspensions of finely divided insoluble solid particles. Agrochemical SCs may be prepared by ball or bead milling a solid agrochemical in a suitable medium, optionally with one or more dispersing agents, to produce a fine particle suspension of the agrochemical. One or more wetting agents may be included in the composition and a suspending agent may be included to reduce the rate at which the particles settle. Alternatively, an agrochemical may be dry milled and added to water, containing agents hereinbefore described, to produce the desired end product.

Capsule suspensions (CS) may be prepared in a manner similar to the preparation of EW formulations but with an additional polymerisation stage such that an aqueous dispersion of oil droplets is obtained, in which each oil droplet is encapsulated by a polymeric shell and contains an agrochemical and, optionally, a carrier or diluent therefor. The polymeric shell may be produced by either an interfacial polycondensation reaction or by a coacervation procedure. Agrochemical compositions may provide controlled release of an agrochemical, reduce operator exposure to an agrochemical or they may be used for seed treatment.

Some compositions may contain a mixture of an agrochemical with one or more other agrochemicals or other additives. Some mixtures may comprise agrochemicals or additives that have significantly different physical, chemical or biological properties such that they do not easily lend themselves to the same conventional formulation type. In these circumstances other formulation types may be prepared. For example, where one agrochemical is a water insoluble solid and another agrochemical is a water insoluble liquid, it may nevertheless be possible to disperse each agrochemical in the same continuous aqueous phase by dispersing the solid agrochemical as a suspension (using a preparation analogous to that of an SC) but dispersing the liquid agrochemical as an emulsion (using a preparation analogous to that of an EW). The resultant composition is a suspoemulsion (SE) formulation.

According to another embodiment, formulations of agriculturally useful active ingredients can be delivered in a water dispersible solid form (solid agrochemical formulation), which may be sprayed for agricultural treatments after dilution. In particular, such formulations include water dispersible granules (WDG) and wettable powders (WP) of a solid active agent or a liquid active ingredient loaded onto a solid carrier, which can effect WDG and WP formulations. Some active ingredients that are ultimately soluble in a final dilution useful for spraying may require initial dispersion in water for dissolution to take effect. These particular examples of WDGs may be alternatively described as water soluble granules (WSG).

The formulation used in the present invention is preferably a water-based formulation, and more especially a soluble concentrate formulation.

The formulation used in the present invention is most preferably a soluble concentrate formulation.

It may be for example a soluble concentrate formulation comprising a high amount of the agrochemical active ingredient of the invention.

For example, it may be a soluble concentrate formulation comprising from 360 g/L to 560 g/L of the agrochemical active ingredient, preferably of the aminophosphate or aminophosphonate salt, preferably of glyphosate salt.

The formulation used in the present invention may also comprise further ingredients, such as:
- surfactants,
- anti-foaming agents,
- solvents, preferably water miscible solvent, preferably polar solvents, or
- deposition control agents such as anti-rebound or anti-drift agents, optionally added afterward.

The one skilled in the art knows further ingredients that could be used for managing some properties or features of the composition and/or for adding benefits.

The formulations may for example comprise:
- organopolysiloxanes antifoaming agent;
- thickening agents such as xanthan gum type polysaccharides, alginates, carboxylated or hydroxylated methylcelluloses, synthetic macromolecules of the polyacrylate, polymaleate, polyvinylpyrrolidone, polyethylene glycol or polyvinyl alcohol type, or of the inorganic type such as bentonites (the amount of these additives listed above is normally less than 10% by weight, preferably 1% by weight or less, advantageously 0.1% by weight or less compared with the composition weight);
- auxiliary additives such as antioxidants, anti-UV agents, colorants, etc;
- solvents such as an alcohol, for example isopropanol, typically up to 15% by weight.

The formulation used in the present invention may also comprise one or several surfactants.

These surfactants are preferably chosen from the group consisting of: betaines, preferably alkyl dimethyl amine betaine, amine oxides, ethoxylated fatty amines, fatty amines, ether carboxylates, acid or non acid mono- and di-ester phosphates, optionally polyalkoxylated, alkylmonoglycosides, alkylpolyglycosides, and mixtures thereof.

The betaine surfactants are in particular those described in WO2006/069794. Preferably, the betaine surfactants are chosen from the betaines having formula R¹R²R²N⁺-CH₂COO⁻ (I), the betaines having formula R¹-CO-NH-R⁴-R²R²N⁺-CH₂COO⁻ (II), and mixtures thereof, wherein R¹ which is identical or different, is a linear or branched hydrocarbon group, preferably an alkyl group containing 2 to 30 carbon atoms, preferably 2 to 24 carbon atoms, preferably 3 to 20 carbon atoms, R², which is identical or different, is a C1-C3 alkyl group, preferably a methyl group, and R⁴, which is identical or different, is a divalent linear or branched hydrocarbon group containing 1 to 6 carbon atoms, optionally substituted with a hydroxyl group, preferably a group of formula -CH₂-CH₂-CH₂- or -CH₂-CHOH-CH₂-.

Preferably, in formulae (I) and (II), R² is a methyl group, R¹ is a lauryl alkyl group mixture, preferably having more than 50% by weight of C₁₂ and, R⁴ if present is -CH₂-CH₂-CH₂-.

The betaine has preferably R² being a methyl group. R¹ is preferably an alkyl group. This group is usually actually a mixture of different groups having different numbers of carbon atoms, being linear or branched, and optionally having some insaturations. These mixtures come from the reagents used to prepare them, which are actually distillation cuts and/or have a natural origin. In the present specification the number of carbon atoms in the R¹ group refers to the number of carbon atoms of the two most represented species.

Betaines of formula (I) are preferred. They are often referred to as alkyl betaines, and are preferably an alkyldimethyl betaine based surfactant, for example lauryl dimethyl betaine based surfactant (R² is a methyl group, R¹ is a lauryl C₁₂ group). Betaines of formula (II) are often referred to as alkyl amidoalkyl betaines.

The amine oxides surfactants are in particular those described in WO2006/069794. Preferably, the amine oxides surfactants are chosen from the amine oxides having formula R¹R²R²N→O (III), the amine oxides having formula R¹-CO-NH-R⁴-R²R²N→O (IV), and mixtures thereof, wherein R¹, R², and R⁴ are as described in formulae (I) and (II).

The amine oxide has preferably R² being a methyl group. R¹ is preferably an alkyl group. This group is usually actually a mixture of different groups having different numbers of carbon atoms, being linear or branched, and optionally having some insaturations. These mixtures come from the reagents used to prepare them, which are actually distillation cuts and/or have a natural origin. In the present specification the number of carbon atoms in the R¹ group refers to the number of carbon atoms of the two most represented species. Preferably, R² is a methyl group, R¹ is a lauryl alkyl group mixture, preferably having more than 50% by weight of C₁₂ and, R⁴ if present is -CH₂-CH₂-CH₂-.

Amine oxides of formula (III) are preferred. They are often referred to as alkyl amine oxides, and are preferably an alkyldimethyl amine oxide based surfactant, for example lauryl dimethyl amine oxide based surfactant (R² is a methyl group, R¹ is a lauryl C₁₂ group). Amine oxides of formula (IV) are often referred to as alkyl amidoalkyl amine oxides.

Such surfactants (betaines and amine oxides) are known by the one skilled in the art and are commercially available.

The fatty amines or ethoxylated fatty amines may comprise at least one hydrocarbon group containing 2 to 24 carbon atoms, optionally polyalkoxylated.

The fatty amines or ethoxylated fatty amines may more particularly be selected from amines comprising at least one linear or branched, saturated or unsaturated group containing 2 to 24 carbon atoms, preferably 8 to 18 carbon atoms, optionally comprising 2 to 30 oxyethylene groups, or a mixture of a plurality thereof. Examples include ethoxylated tallow amines.

The fatty amines or ethoxylated fatty amines may be selected from ethoxylated fatty amines comprising at least one or several, linear or branched, saturated or unsaturated, group(s) containing 6 to 24 carbon atoms, preferably 8 to 20 carbon atoms, comprising 2 to 30 oxyethylene groups, or mixtures thereof.

Examples include the compounds having the following formula: 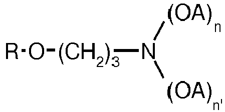 wherein R represents a linear or branched, saturated or unsaturated hydrocarbon group containing 6 to 24 carbon atoms, preferably 8 to 20 carbon atoms; OA represents an oxypropylene group; and n, n', which may or may not be identical, represent a mean number in the range 1 to 30.

Examples of such amines to be cited are amines derived from copra and containing 5 oxyethylene (OE) motifs, oleic amines containing 5 OE, amines derived from tallow containing 5-20 OE, for example 10, compounds corresponding to the above formula, in which R is an alkyl group containing 12 to 15 carbon atoms, the number of OE motifs being in the range 20 to 30.

The amount of fatty amines or ethoxylated fatty amines may be of from 0 (none) to 120 g/l of the composition, preferably of from 0 (none) to 60 g/l.

The ether carboxylate has preferably formula R(OCH₂CH₂)ₙOCH₂CO₂, wherein R is a linear or branched alkyl, alkenyl, alkylphenyl or polypropyleneoxy group having from 6 to 20, for example 8 to 14, aliphatic carbon atoms and n is of from 1 to 30, preferably of from 2 to 20. The ether carboxylate has preferably a counter ion being ammonium or potassium, or obtained from an amine or alkanolamine having up to 6 carbon atoms.

The acid or non acid mono- and di-ester phosphate, optionally polvalkoxylated is selected from acid or non acid phosphate mono- or di-esters, optionally polyalkoxylated, with the formula below: (A)₃₋ₘP(=O)(OM)ₘ wherein:
- A, identical or different, represents a group R'¹-O(CH₂-CHR'²-O)ₙ wherein:
   R'¹, identical or different, represents a linear or non linear, saturated or unsaturated C6-C20 hydrocarbon group, preferably C8-C18;
      - R'², identical or different, represents a hydrogen atom or a methyl or ethyl group, preferably a hydrogen atom;
      - n is a mean number of motifs in the range 0 to 10, preferably in the range 2 to 10;
      - M, identical or different, represents a hydrogen atom, an alkali or alkaline-earth metal, a N(R³)₄⁺ type radical wherein R³, identical or different, represents a hydrogen atom or a linear or non linear, saturated or unsaturated C1-C6 hydrocarbon group optionally substituted with a hydroxyl group;
      - m is a whole or average number in the range 1 to 2.

The acid or non acid mono- and di-ester phosphate, optionally polyalkoxylated may be in the form of a monoester, a diester, or a mixture of these two esters. The amount of acid or non acid mono- and di-ester phosphate, optionally polyalkoxylated can be of from 0 (none) to 120 g/l of the composition.

When the formulation used in the present invention comprises a surfactant, the weight of said surfactant is from 0 to 50 % by weight based on the total weight of the formulation.

Preferably, the formulations used in the present invention comprise choline chloride in amounts from 1 to 99 % by weight based on the total weight of the formulation, for example in amounts from 2 to 75 % by weight based on the total weight of the formulation, for example from 5 to 50 % by weight based on the total weight of the formulation.

Choline chloride may preferably be used as a formulation comprising from 1 to 100% by weight of choline chloride, for example from 5 to 95% by weight, for example from 10 to 90% by weight, relative to the total weight of the formulation.

Choline chloride may be formulated in water.

It may alternatively or additionally be formulated in a glycol solvent, such as glycerine or polyethyleneglycolether.

According to one embodiment, choline chloride may be used as a product comprising from 50% to 90% by weight of choline chloride in mixture in a glycol solvent, such as glycerine or polyethyleneglycolether.

The present invention also relates to a method for treating a plant, comprising the application onto said plant of a composition comprising choline chloride acting as a bio-activator and at least one agrochemical active ingredient.

Preferably, in the method of the invention, the agrochemical active ingredient is a glyphosate potassium salt, a glyphosate isopropylamine salt, a glyphosate ammonium salt, a glufosinate ammonium salt, 2,4-D (2,4-Dichlorophenoxyacetic acid, salt), MCPA (2-methyl-4-chlorophenoxyacetic acid, amine or sodium salt) or other herbicides based on paraquat, quaternary ammonium herbicides (1, 1-dimethyl-4, 4-bipyridinium).

The formulation is preferably applied on the plant by spraying.

The present invention also relates to a method of enhancing penetration of an agrochemical active ingredient in a plant, said method comprising applying to said plant (a) at least one agrochemical active ingredient, and (b) choline chloride,
wherein said components (a) and (b) are applied simultaneously and/or sequentially to the plant.

The present invention relates to a method for increasing the penetration of an agrochemical active ingredient in a plant, comprising the application onto said plant of a composition comprising choline chloride acting as a bio-activator and at least one agrochemical active ingredient.

Preferably, in the method of the invention, the agrochemical active ingredient isa glyphosate potassium salt, a glyphosate isopropylamine salt, a glufosinate ammonium salt, 2,4-D (2,4-Dichlorophenoxyacetic acid, salt), MCPA (2-methyl-4-chlorophenoxyacetic acid, amine or sodium salt) or other herbicides based on paraquat, quaternary ammonium herbicides (1,1-dimethyl-4,4-bipyridinium).

### EXAMPLES

Green-house tests have been conducted with different samples of Glyphosate SL (soluble concentrate).

The following products, weeds and materials have been used.
- Glyphosate solutions: Glyphosate 360-IPA (isopropylamine salt) or Glyphosate 540-K (potassium salt)
- Products
   - Geronol^{®} CF/AR (Rhodia) (for comparison)
   - Geronol^{®} CF/AS-30 (Rhodia) (for comparison)
   - Geronol^{®} CF/Power (Rhodia) (for comparison)
   - Geronol^{®} CF/PN-20 V (Rhodia) (for comparison)
   - Comparative product A (50% by weight of sodium salt of a polycarboxylic acid (BEVALOID 211^{®} (Kemira)) and 50% by weight of glycerine) (for comparison)
   - a composition comprising choline choride
- Weeds

### Amaranthus retroflexus

### Echinochloa crus-galli

### Alopecurus myosuroides

- Materials: 4 Pot Ø 10 cm. for every thesis
- Spraying (Tween-jet 8002EVS) water 350L/ha - 3 atm
- Time (13 days - 21 days)
- Activity 0-5 (0 = no activity / 5 = 100% activity)

### Example I - Formulations with glyphosate isopropylamine salt (Glyphosate 360-IPA SL)

### Formulation 1a)

An agrochemical formulation according to the invention was prepared by mixing glyphosate IPA salt and choline chloride.

This formulation is as follows:
- Glyphosate IPA salt (46% acid) 783 g/L
- Water 277 g/L
- Choline chloride composition (75wt% choline chloride / 25wt %water) 120 g/L

The stability and the physicochemical properties of the formulation according to the invention were tested according to CIPAC methods (well known for the skilled in the art) such as:
- low temperature stability (CIPAC method MT 39)
- heat temperature stability (CIPAC method MT 46)
- emulsion stability (CIPAC method MT 36)
- persistent foaming (CIPAC method MT 47)

The formulation has the following properties:
- Density at 20°C: 1.180
- Foaming (CIPAC method MT47):

| time | 10" | 1' | 3' | 12' |
|---|---|---|---|---|
| foam (mL) | 0 | 0 | 0 | 0 |

- Appearence

| | |
|---|---|
| at 54°C | limpid |
| at 0°C | limpid |
| at -10°C | limpid |

These data show that the formulation according to the invention has suitable properties. Indeed, this formulation does not generate foam and is stable over time.

Different glyphosate IPA salt formulations were tested. The formulation of the invention (comprising choline chloride) was compared with known glyphosate IPA formulations (comprising usual surfactants).

The below formulations were tested at different concentrations: 90-720 grams of active ingredient/ha.

| **Thesis** | **Samples** | **Products (mixed with IPA glyphosate)** | **gr. a.i. / ha** | **gr**. **on 2 mq a.i.** |
|---|---|---|---|---|
| 2 | 1 | Geronol^{®} CF/AR (benchmark) | 90 | 0.059 |
| 3 | 1 | Geronol^{®} CF/AR (benchmark) | 180 | 0.118 |
| 4 | 1 | Geronol^{®} CF/AR (benchmark) | 360 | 0.236 |
| 5 | 1 | Geronol^{®} CF/AR (benchmark) | 720 | 0.472 |
| | | | | |
| 6 | 2 | Geronol^{®} CF/AS-30 (benchmark) | 90 | 0.059 |
| 7 | 2 | Geronol^{®} CF/AS-30 (benchmark) | 180 | 0.118 |
| 8 | 2 | Geronol^{®} CF/AS-30 (benchmark) | 360 | 0.236 |
| 9 | 2 | Geronol^{®} CF/AS-30 (benchmark) | 720 | 0.472 |
| | | | | |
| 10 | 3 | comparative product A | 90 | 0.059 |
| 11 | 3 | comparative product A | 180 | 0.118 |
| 12 | 3 | comparative product A | 360 | 0.236 |
| 13 | 3 | comparative product A | 720 | 0.472 |
| | | | | |
| 14 | 4 | composition with choline chloride (formulation 1a) | 90 | 0.059 |
| 15 | 4 | composition with choline chloride (formulation 1a) | 180 | 0.118 |
| 16 | 4 | composition with choline chloride (formulation 1a) | 360 | 0.236 |
| 17 | 4 | composition with choline chloride (formulation 1a) | 720 | 0.472 |

The above-mentioned formulations were tested on several weeds: *Amaranthus retroflexus* (AMARE), *Alopecurus myosuroides* (ALOMY) and *Echinochloa crus-galli* (ECHCG).

The below table represents activities at 13 or 21 days.

| | | | **13 Days** | | | **21 Days** | | |
|---|---|---|---|---|---|---|---|---|
| **Thesis** | **Samples** | **gr. a.i./ha** | **AMARE** | **ALOMY** | **ECHCG** | **AMARE** | **ALOMY** | **ECHCG** |
| 2 | 1 | 90 | 3 | 0.5 | 0.5 | 1 | 0 | 0 |
| 3 | 1 | 180 | 4 | 0.5 | 1 | 3 | 0.5 | 1 |
| 4 | 1 | 360 | 5 | 4 | 4 | 5 | 2.5 | 3 |
| 5 | 1 | 720 | 5 | 4.9 | 4.8 | 5 | 5 | 4.5 |
| | | | | | | | | |
| 6 | 2 | 90 | 2.5 | 0 | 0 | 1 | 0 | 0 |
| 7 | 2 | 180 | 3.5 | 0.5 | 0.5 | 2 | 0.5 | 0.5 |
| 8 | 2 | 360 | 4.8 | 3.5 | 4 | 4.8 | 3.5 | 3 |
| 9 | 2 | 720 | 4.9 | 4.9 | 4.8 | 5 | 5 | 4.9 |
| | | | | | | | | |
| 10 | 3 | 90 | 3 | 0 | 0 | 1 | 0 | 0 |
| 11 | 3 | 180 | 4.5 | 0 | 0.5 | 1 | 0 | 0.5 |
| 12 | 3 | 360 | 4.8 | 0.5 | 2.5 | 4.8 | 1 | 1 |
| 13 | 3 | 720 | 5 | 4.5 | 3.5 | 5 | 4 | 3 |
| | | | | | | | | |
| 14 | 4 | 90 | 2 | 0 | 0 | 0.5 | 0 | 0 |
| 15 | 4 | 180 | 4.5 | 0.5 | 1 | 4 | 0.5 | 1 |
| 16 | 4 | 360 | 5 | 2.5 | 3 | 5 | 2.5 | 2.5 |
| 17 | 4 | 720 | 5 | 4 | 4.5 | 5 | 4 | 4 |

These results show that the formulation according to the present invention (with choline chloride) has activities similar to known formulations with surfactants but without having their drawbacks (such as the foam generation).

### Formulation 1b)

An agrochemical formulation according to the invention was prepared by mixing glyphosate IPA salt and choline chloride (in mixture in a glycol solvent).

This formulation is as follows:
- Glyphosate IPA salt (46% acid) 783 g/L
- Water 277 g/L
- Choline chloride composition (75wt% choline chloride / 25wt% water) in mixture in glycerine (weight ratio choline chloride composition/glycerine: 70/30) 120 g/L

The stability and the physicochemical properties of the formulation according to the invention were tested according to CIPAC methods (well known for the skilled in the art) such as:
- low temperature stability (CIPAC method MT 39)
- heat temperature stability (CIPAC method MT 46)
- emulsion stability (CIPAC method MT 36)
- persistent foaming (CIPAC method MT 47)

The formulation has the following properties:
- Density at 20°C: 1.180
- Persistent Foaming (CIPAC method MT47): 0 mL
- Appearence

| | |
|---|---|
| at 54°C | limpid |
| at 0°C | limpid |
| at -10°C | limpid |

These data show that the formulation according to the invention has suitable properties. Indeed, this formulation does not generate foam and is stable over time.

Different glyphosate IPA salt formulations were tested. The formulation of the invention (comprising choline chloride) was compared with known glyphosate IPA formulations (comprising usual surfactants).

The below formulations were tested at different concentrations: 90-720 grams of active ingredient/ha.

| **Thesis** | **Samples** | **Products (mixed with IPA glyphosate)** | **gr. a.i. / ha** | **gr. on 2 mq a.i.** |
|---|---|---|---|---|
| 2 | 1 | Geronol^{®} CF/AR (benchmark) | 90 | 0.059 |
| 3 | 1 | Geronol^{®} CF/AR (benchmark) | 180 | 0.118 |
| 4 | 1 | Geronol^{®} CF/AR (benchmark) | 360 | 0.236 |
| 5 | 1 | Geronol^{®} CF/AR (benchmark) | 720 | 0.472 |
| | | | | |
| 6 | 2 | Geronol^{®} CF/AS-30 (benchmark) | 90 | 0.059 |
| 7 | 2 | Geronol^{®} CF/AS-30 (benchmark) | 180 | 0.118 |
| 8 | 2 | Geronol^{®} CF/AS-30 (benchmark) | 360 | 0.236 |
| 9 | 2 | Geronol^{®} CF/AS-30 (benchmark) | 720 | 0.472 |
| | | | | |
| 10 | 3 | comparative product A | 90 | 0.059 |
| 11 | 3 | comparative product A | 180 | 0.118 |
| 12 | 3 | comparative product A | 360 | 0.236 |
| 13 | 3 | comparative product A | 720 | 0.472 |
| | | | | |
| 14 | 4' | composition with choline chloride (formulation 1b) | 90 | 0.059 |
| 15 | 4' | composition with choline chloride (formulation 1b) | 180 | 0.118 |
| 16 | 4' | composition with choline chloride (formulation 1b) | 360 | 0.236 |
| 17 | 4' | composition with choline chloride (formulation 1b) | 720 | 0.472 |

The above-mentioned formulations were tested on several weeds: *Amaranthus retroflexus* (AMARE), *Alopecurus myosuroides* (ALOMY) and *Echinochloa crus-galli* (ECHCG).

The below table represents activities at 21 days.

| | | **21 Days** | | | |
|---|---|---|---|---|---|
| **Thesis** | **Samples** | | **gr. a.i./ha** | | **ECHCG** |
| 2 | 1 | | 90 | | 0 |
| 3 | 1 | | 180 | | 1 |
| 4 | 1 | | 360 | | 3 |
| 5 | 1 | | 720 | | 4.5 |
| | | | | | |
| 6 | 2 | | 90 | | 0 |
| 7 | 2 | | 180 | | 0.5 |
| 8 | 2 | | 360 | | 3 |
| 9 | 2 | | 720 | | 4.9 |
| | | | | | |
| 10 | 3 | | 90 | | 0 |
| 11 | 3 | | 180 | | 0.5 |
| 12 | 3 | | 360 | | 1 |
| 13 | 3 | | 720 | | 3 |
| | | | | | |
| 14 | 4' | | 90 | | 0 |
| 15 | 4' | | 180 | | 1 |
| 16 | 4' | | 360 | | 2.5 |
| 17 | 4' | | 720 | | 4 |

These results show that the formulation according to the present invention (with choline chloride) has activities similar to known formulations with surfactants but without having their drawbacks (such as the foam generation).

### Example II - Formulations with -glyphosate potassium salt (Glyphosate 540-K SL)

### Formulation 2a)

An agrochemical formulation according to the invention was prepared by mixing glyphosate, KOH and choline chloride.

This formulation is as follows:
- Glyphosate acid tech. 95% 568 g/L
- KOH 50% 480 g/L
- Water 152 g/L
- Choline chloride composition (75wt% choline chloride / 25wt% water) 160 g/L

The stability and the physicochemical properties of the formulation according to the invention were tested according to CIPAC methods (well known for the skilled in the art) such as:
- low temperature stability (CIPAC method MT 39)
- heat temperature stability (CIPAC method MT 46)
- emulsion stability (CIPAC method MT 36)
- persistent foaming (CIPAC method MT 47)

The formulation has the following properties:
- Density at 20°C: 1.360 - pH (5% sol.): 5.0
- Dispersibility (conc. 2% - CIPAC Waters): soluble
- Foaming (CIPAC method MT47):

| Time | 10" | 1' | 3' | 12' |
|---|---|---|---|---|
| foam (mL) | 0 | 0 | 0 | 0 |

- Appearence

| | |
|---|---|
| at 54°C | limpid |
| at 0°C | limpid |
| at -10°C | limpid |

These data show that the formulation according to the invention has suitable properties. Indeed, the formulation does not generate foam and is stable over time.

Different formulations were tested. The formulation of the invention (comprising choline chloride) was compared with known glyphosate potassium formulations (comprising usual surfactants).

The below formulations were tested at different concentrations: 90-720 grams of active ingredient/ha.

| **Thesis** | **Samples** | **Products (mixed with K glyphosate)** | **gr. a.i. / ha** | **gr. on 2 mq a.i.** |
|---|---|---|---|---|
| 18 | 5 | Geronol^{®} CF/Power (benchmark) | 90 | 0.045 |
| 19 | 5 | Geronol^{®} CF/Power (benchmark) | 180 | 0.090 |
| 20 | 5 | Geronol^{®} CF/Power (benchmark) | 360 | 0.181 |
| 21 | 5 | Geronol^{®} CF/Power (benchmark) | 720 | 0.362 |
| | | | | |
| 22 | 6 | Geronol^{®} CF/PN-20 V (benchmark) | 90 | 0.045 |
| 23 | 6 | Geronol^{®} CF/PN-20 V (benchmark) | 180 | 0.090 |
| 24 | 6 | Geronol^{®} CF/PN-20 V (benchmark) | 360 | 0.181 |
| 25 | 6 | Geronol^{®} CF/PN-20 V (benchmark) | 720 | 0.362 |
| | | | | |
| 26 | 7 | comparative product A | 90 | 0.045 |
| 27 | 7 | comparative product A | 180 | 0.090 |
| 28 | 7 | comparative product A | 360 | 0.181 |
| 29 | 7 | comparative product A | 720 | 0.362 |
| | | | | |
| 30 | 8 | composition with choline chloride (formulation 2a) | 90 | 0.045 |
| 31 | 8 | composition with choline chloride (formulation 2a) | 180 | 0.090 |
| 32 | 8 | composition with choline chloride (formulation 2a) | 360 | 0.181 |
| 33 | 8 | composition with choline chloride (formulation 2a) | 720 | 0.362 |

The above-mentioned formulations were tested on several weeds: *Amaranthus retroflexus* (AMARE), *Alopecurus myosuroides* (ALOMY) and *Echinochloa crus-galli* (ECHCG).

The below table represents activities at 13 or 21 days.

| | | | **13 Days** | | | **21 Days** | | |
|---|---|---|---|---|---|---|---|---|
| **Thesis** | **Samples** | **gr. a.i./ha** | **AMARE** | **ALOMY** | **ECHCG** | **AMARE** | **ALOMY** | **ECHCG** |
| 18 | 5 | 90 | 1.5 | 1.5 | 0 | 0.5 | 0.5 | 0 |
| 19 | 5 | 180 | 4.5 | 3 | 1 | 3 | 2 | 0.5 |
| 20 | 5 | 360 | 4.8 | 4.9 | 3 | 4.9 | 4.9 | 4.5 |
| 21 | 5 | 720 | 4.9 | 5 | 5 | 5 | 5 | 5 |
| | | | | | | | | |
| 22 | 6 | 90 | 3 | 1 | 0 | 1.5 | 0 | 0 |
| 23 | 6 | 180 | 4 | 1.5 | 1 | 2.5 | 0.5 | 1 |
| 24 | 6 | 360 | 4.9 | 4.9 | 4.5 | 4.9 | 4.9 | 4.5 |
| 25 | 6 | 720 | 5 | 5 | 5 | 5 | 5 | 5 |
| | | | | | | | | |
| 26 | 7 | 90 | 2 | 0.5 | 0.5 | 1 | 0 | 0 |
| 27 | 7 | 180 | 4 | 1 | 1 | 3 | 0.5 | 0.5 |
| 28 | 7 | 360 | 5 | 2 | 4.5 | 5 | 1 | 3 |
| 29 | 7 | 720 | 5 | 4 | 4.8 | 5 | 4.5 | 4 |
| | | | | | | | | |
| 30 | 8 | 90 | 4.5 | 0.5 | 1 | 3.5 | 0 | 0.5 |
| 31 | 8 | 180 | 4.9 | 0.5 | 1.5 | 4 | 1 | 1 |
| 32 | 8 | 360 | 5 | 3.5 | 4 | 5 | 4 | 3 |
| 33 | 8 | 720 | 5 | 4.5 | 4.5 | 5 | 5 | 4 |

These results show that the formulation according to the present invention (with choline chloride) has activities similar to known formulations with surfactants but without having their drawbacks (such as the foam generation).

### Formulation 2b)

An agrochemical formulation according to the invention was prepared by mixing glyphosate, KOH and choline chloride (in mixture in a glycol solvent).

This formulation is as follows:
- Glyphosate acid tech. 95% 568 g/L
- KOH 50% 480 g/L
- Water 152 g/L
- Choline chloride composition (75wt% choline chloride / 25wt% water) in mixture in glycerine (weight ratio choline chloride composition/glycerine: 70/30)160 g/L

The stability and the physicochemical properties of the formulation according to the invention were tested according to CIPAC methods (well known for the skilled in the art) such as:
- low temperature stability (CIPAC method MT 39)
- heat temperature stability (CIPAC method MT 46)
- emulsion stability (CIPAC method MT 36)
- persistent foaming (CIPAC method MT 47)

The formulation has the following properties:
- Density at 20°C: 1.360
- pH (5% sol.): 5.0
- Dispersibility (conc. 2% - CIPAC Waters): soluble
- Persistent Foaming (CIPAC method MT47): 0 mL
- Appearence

| | |
|---|---|
| at 54°C | limpid |
| at 0°C | limpid |
| at -10°C | limpid |

These data show that the formulation according to the invention has suitable properties. Indeed, the formulation does not generate foam and is stable over time.

Different formulations were tested. The formulation of the invention (comprising choline chloride) was compared with known glyphosate potassium formulations (comprising usual surfactants).

The below formulations were tested at different concentrations: 90-720 grams of active ingredient/ha.

| **Thesis** | **Samples** | **Products (mixed with K glyphosate)** | **gr. a.i. / ha** | **gr. on 2 mq a.i.** |
|---|---|---|---|---|
| 2 | 5 | Geronol^{®} CF/Power (benchmark) | 90 | 0.045 |
| 3 | 5 | Geronol^{®} CF/Power (benchmark) | 180 | 0.090 |
| 4 | 5 | Geronol^{®} CF/Power (benchmark) | 360 | 0.181 |
| 5 | 5 | Geronol^{®} CF/Power (benchmark) | 720 | 0.362 |
| | | | | |
| 6 | 8' | composition with choline chloride (formulation 2b) | 90 | 0.045 |
| 7 | 8' | composition with choline chloride (formulation 2b) | 180 | 0.090 |
| 8 | 8' | composition with choline chloride (formulation 2b) | 360 | 0.181 |
| 9 | 8' | composition with choline chloride (formulation 2b) | 720 | 0.362 |

The above-mentioned formulations were tested on several weeds: *Amaranthus retroflexus* (AMARE), *Alopecurus myosuroides* (ALOMY) and *Echinochloa crus-galli* (ECHCG).

The below table represents activities at 12 or 21 days.

| | | | **12 Days** | | **21 Days** | |
|---|---|---|---|---|---|---|
| **Thesis** | **Samples** | **gr. a.i./ha** | **ALOMY** | **ECHCG** | **ALOMY** | **ECHCG** |
| 2 | 5 | 90 | 0.5 | 0.5 | 0.5 | 0.5 |
| 3 | 5 | 180 | 1 | 3 | 1 | 1.5 |
| 4 | 5 | 360 | 2.5 | 4 | 2.5 | 4.5 |
| 5 | 5 | 720 | 4.9 | 5 | 5 | 5 |
| | | | | | | |
| 6 | 8' | 90 | 0.5 | 1 | 0.5 | 0.5 |
| 7 | 8' | 180 | 2 | 2 | 1 | 1.5 |
| 8 | 8' | 360 | 3 | 3.5 | 2.5 | 3 |
| 9 | 8' | 720 | 4 | 4.5 | 3.5 | 4 |

These results show that the formulation according to the present invention (with choline chloride) has activities similar to known formulations with surfactants but without having their drawbacks (such as the foam generation).

### Example III - Other Formulations

Other agrochemical formulations were prepared by mixing an agrochemical active ingredient and a choline chloride based formulation.

The choline chloride based formulation consists in a choline chloride composition (75wt% choline chloride / 25wt% water) in mixture in glycerine (weight ratio choline chloride composition/glycerine: 70/30).

The stability and the physico-chemical properties of these formulations were tested according to CIPAC methods indicated previously in Examples I and II.

### Formulation 3 (Glyphosate 450-IPA SL)

Formulation 3 is as follows:
- Glyphosate IPA salt (46% acid) 979 g/L
- Water 101 g/L
- Choline chloride based formulation 120 g/L

Formulation 3 has the following properties:
- Density at 20°C: 1.200
- pH (5% sol.): 4.9
- Dispersibility (conc. 2% - CIPAC Waters): soluble
- Persistent Foaming (CIPAC method MT47): 0 mL
- Appearence

| | |
|---|---|
| at 54°C | limpid |
| at 0°C | limpid |
| at -10°C | limpid |

### Formulation 4 (Glyphosate 510-IPA SL)

Formulation 4 is as follows:
- Glyphosate IPA salt (46% acid) 1109 g/L
- Water 16 g/L
- Choline chloride based formulation 100 g/L

Formulation 4 has the following properties:
- Density at 20°C: 1.225
- pH (5% sol.): 4.9
- Dispersibility (conc. 2% - CIPAC Waters): soluble
- Persistent Foaming (CIPAC method MT47): 0 mL
- Appearence

| | |
|---|---|
| at 54°C | limpid |
| at 0°C | limpid |
| at -10°C | limpid |

### Formulation 5 (Glyphosate 450-K SL)

Formulation 5 is as follows:
- Glyphosate acid tech. 95% 474 g/L
- KOH 50% 390 g/L
- Water 344 g/L
- Choline chloride based formulation 120 g/L

Formulation 5 has the following properties:
- Density at 20°C: 1.328
- pH (5% sol.): 5.0
- Dispersibility (conc. 2% - CIPAC Waters): soluble
- Persistent Foaming (CIPAC method MT47): 0 mL
- Appearence

| | |
|---|---|
| at 54°C | limpid |
| at 0°C | limpid |
| at -10°C | limpid |

### Formulation 6 (Glyphosate 600-K SL)

Formulation 6 is as follows:
- Glyphosate acid tech. 95% 632 g/L
- KOH 50% 508 g/L
- Water 155 g/L
- Choline chloride based formulation 100 g/L

Formulation 6 has the following properties:
- Density at 20°C: 1.395
- pH (5% sol.): 4.9
- Dispersibility (conc. 2% - CIPAC Waters): soluble
- Persistent Foaming (CIPAC method MT47): 0 mL
- Appearence

| | |
|---|---|
| at 54°C | limpid |
| at 0°C | limpid |
| at -10°C | limpid |

### Formulation 7 (Glufosinate-Am 200 g/L SL)

Formulation 7 is as follows:
- Glufosinate tech. 50% 400 g/L
- Water 370 g/L
- Choline chloride based formulation 400 g/L

Formulation 7 has the following properties:
- Density at 20°C: 1.170
- pH (5% sol.): 5.2
- Dispersibility (conc. 2% - CIPAC Waters): soluble
- Persistent Foaming (CIPAC method MT47): 0 mL
- Appearence

| | |
|---|---|
| at 54°C | limpid |
| at 0°C | limpid |
| at -10°C | limpid |
| at -20°C | limpid |

### Formulation 8 (Imazethapyr 100 g/L SL)

Formulation 8 is as follows:
- Imazethapyr tech. 95% 106 g/L
- Ammonium 30 g/L
- Water 800 g/L
- Choline chloride based formulation 100 g/L

Formulation 8 has the following properties:
- Density at 20°C: 1.036
- pH (5% sol.): 7.3
- Dispersibility (conc. 2% - CIPAC Waters): soluble
- Persistent Foaming (CIPAC method MT47): 0 mL
- Appearence

| | |
|---|---|
| at 54°C | limpid |
| at 0°C | limpid |
| at -10°C | limpid |

### Formulation 9 (Clopyralyd 300 g/L SL)

Formulation 9 is as follows:
- Clopyralyd tech. 95% 316 g/L
- Monoethanolamine 100 g/L
- Water 634 g/L
- Choline chloride based formulation 100 g/L

Formulation 9 has the following properties:
- Density at 20°C: 1.150
- pH (5% sol.): 8.5
- Dispersibility (conc. 2% - CIPAC Waters): soluble
- Persistent Foaming (CIPAC method MT47): 0 mL
- Appearence

| | |
|---|---|
| at 54°C | limpid |
| at 0°C | limpid |
| at -10°C | limpid |

### Formulation 10 (2,4D 357 Dicamba 124 g/L SL)

Formulation 10 is as follows:
- 2,4D tech. 98% 365 g/L
- Dicamba tech. 97% 128 g/L
- Dimethylamine 33% 310 g/L
- Water 250 g/L
- Choline chloride based formulation 100 g/L

Formulation 10 has the following properties:
- Density at 20°C: 1.153
- pH (5% sol.): 8.6
- Dispersibility (conc. 2% - CIPAC Waters): soluble
- Persistent Foaming (CIPAC method MT47): 0 mL
- Appearence

| | |
|---|---|
| at 54°C | limpid |
| at 0°C | limpid |
| at -10°C | limpid |

### Formulation 11 (Paraquat 276 g/L SL)

Formulation 11 is as follows:
- Paraquat tech. 42% 657 g/L
- Water 333 g/L
- Choline chloride based formulation 100 g/L

Formulation 11 has the following properties:
- Density at 20°C: 1.090
- pH (5% sol.): 6.0
- Dispersibility (conc. 2% - CIPAC Waters): soluble
- Persistent Foaming (CIPAC method MT47): 0 mL
- Appearence

| | |
|---|---|
| at 54°C | limpid |
| at 0°C | limpid |

### Formulation 12 (Glyphosate-IPA 120 - 2,4D DMA 120 g/L SL)

Formulation 12 is as follows:
- Glyphosate IPA salt (46% ac.) 261 g/L
- 2,4D DMA (45.7 acid) 263 g/L
- Water 417 g/L
- Monoethanolamine 52 g/L
- Choline chloride based formulation 120 g/L

Formulation 12 has the following properties:
- Density at 20°C: 1.113
- pH (5% sol.): 6.3
- Dispersibility (conc. 2% - CIPAC Waters): soluble
- Persistent Foaming (CIPAC method MT47): 0 mL
- Appearence

| | |
|---|---|
| at 54°C | limpid |
| at 0°C | limpid |

### Formulation 13 (Propamocarb 66.6% SL)

Formulation 13 is as follows:
- Propamocarb tech. 90% 74%
- Water 16%
- Choline chloride based formulation 10%

Formulation 13 has the following properties:
- Density at 20°C: 1.091
- pH (5% sol.): 5.5
- Dispersibility (conc. 2% - CIPAC Waters): soluble
- Persistent Foaming (CIPAC method MT47): 0 mL
- Appearence

| | |
|---|---|
| at 54°C | limpid |
| at 0°C | limpid |

These data show that these other formulations according to the invention have suitable properties. In particular, these formulations do not generate foam and are stable over time.

## Claims

1. The use of choline chloride in a formulation comprising at least one agrochemical active ingredient, as a bio-activator to increase the penetration of said agrochemical active ingredient in a plant, wherein said agrochemical active ingredient is 2,4-dichlorophenoxyacetic acid, salt and 2-methyl-4-chlorophenoxyacetic acid, amine or sodium salt.

2. The use of claim 1, wherein the formulation is a tank-mix or a built-in formulation.

3. The use of any one of claims 1 to 2, wherein the formulation is a water-based formulation, preferably a soluble concentrate formulation.

4. The use of anyone of claims 1 to 3, wherein the formulation comprises choline chloride in amounts from 1 to 99% of the formulation, preferably used as a product comprising from 50% to 90% by weight of choline chloride in mixture in a glycol solvent, such as glycerine or polyethyleneglycolether.

5. The use of any one of claims 1 to 4, wherein the formulation comprises at least one surfactant, said surfactant being preferably chosen from the group consisting of: betaines, preferably alkyl dimethyl betaine, amine oxides, ethoxylated fatty amines, ether carboxylates, acid or non acid mono- and di-ester phosphates, optionally polyalkoxylated, alkylmonoglycosides, alkylpolyglycosides, fatty alcohol alkoxylates and mixtures thereof.

6. The use of claim 5, wherein the weight of the surfactant is from 0 to 50% by weight based on the total weight of the formulation.

7. A method for treating a plant, comprising the application onto said plant of a composition comprising choline chloride acting as a bio-activator and at least one agrochemical active ingredient, wherein said agrochemical active ingredient is 2,4-dichlorophenoxyacetic acid, salt and 2-methyl-4-chlorophenoxyacetic acid, amine or sodium salt.

8. A method for increasing the penetration of an agrochemical active ingredient in a plant, comprising the application onto said plant of a composition comprising choline chloride acting as a bio-activator and at least one agrochemical active ingredient, wherein said agrochemical active ingredient is 2,4-dichlorophenoxyacetic acid, salt and 2-methyl-4-chlorophenoxyacetic acid, amine or sodium salt.
